# EUROPEAN PATENT APPLICATION

(11) **EP 0 690 607 A2**
(43) Date of publication of application: **03.01.1996**
(21) Application number: 95304307.2
(22) Date of filing: 20.06.1995
(51) Int. Cl.: H04M 11/06

(54) **Method and apparatus for transmitting information**

(30) Priority: 30.06.1994 US 268466
(71) Applicant: AT&T Corp., New York, NY 10013-2412 (US)
(72) Inventor: Lee, Dooyong, West Orange, New Jersey 07052 (US)
(74) Representative: Watts, Christopher Malcolm Kelway, Dr.

(57) **Abstract**

A calling party controls the transmission of information over a telecommunications network (12). During a telephone conversation, the calling party presses a specific key of a telephone keypad (30) to select a block of data for transmission. The selected block of data is then passed from a memory (34) to an interface device (42) that transmits the data over the telecommunications network (12) to the called party. In one embodiment, the memory used to store the information is located in a removable device that is carried by the calling party.

## Description

### Background Of the Invention

### 1. Field of the invention

The present invention relates to communications, more specifically, a fast and convenient way to transfer information over a communication channel.

### 2. Description of Prior Art

In the past, when a customer called a telemarketing center to make a purchase, the customer was required to provide his or her name, address, phone number and other information such as credit card numbers. The time and effort required to provide this information caused an inconvenience to the customer and decreased the efficiency of the telemarketing service. This decrease in efficiency also resulted in higher costs being passed along to the customer.

U. S. Patent 5,163,087 entitled "Delivery of Customer Database Key Using Automatic Number Identification" provided a partial solution to this problem. This patent discloses a system that uses an automatic number identification of a calling party to access a network based data base to provide customer information to a business. Unfortunately, this system does not provide the customer with control over what information is provided to the business or telemarketing service.

### Summary of the Invention

An embodiment of the present invention provides a solution to the above mentioned problems by automatically providing customer information to a business or telemarketing service under the control of the customer making the telephone call. The customer or calling party transmits information to the telemarketing service by using a keypad to control information that is read from a memory. The customer controls which information is read from the memory by pressing a specific key of the keypad. The selected information is read from the memory and passed through an interface device onto a telephone line that provides a communications path to the telemarketing service.

In another embodiment of the present invention, the memory used to store information is located in a removable card that is carried by the customer. This offers the advantage of permitting the customer to use any telephone with transmission equipment when ordering services or products from a telemarketing service.

### Brief Description of the Drawing

FIG. 1 illustrates how an information transmission device is used to communicate over a telecommunications network;
FIG. 2 illustrates a microcomputer based embodiment of a information transmission device;
FIG. 3 illustrates the use of a simultaneous voice and data modem;
FIG. 4 illustrates a state machine based embodiment of a information transmission device;
FIG. 5 illustrates a information transmission device that uses a removable card which contains customer data;
FIG. 6 is a flow chart of a programming procedure;
FIG. 7 presents the basic structure of a prior art modem;
FIG. 8 shows the signal space and an illustrative signal constellation for the FIG. 7 system;
FIG. 9 shows the signal space of a QAM analog system;
FIG. 10 shows the signal space of an alternating digital and analog system;
FIG. 11 shows the signal space of a combined digital and analog system;
FIG. 12 presents one embodiment of a transmitter section for a combined digital and analog system;
FIG. 13 depicts the vector addition that forms the signal space of FIG. 11;
FIG. 14 presents one orthogonal modulation approach;
FIG. 15 illustrates the arrangements that permit more than one analog signal source to be transmitted simultaneously;
FIG. 16 details the major elements in a receiver in accordance with the principles of this invention;
FIG. 17 presents a block diagram of a receiver that includes adaptive equalization; FIG. 18 presents the block diagram of an entire modem;
FIG. 19 presents a slightly different embodiment of the FIG. 18 modem; and
FIG. 20 depicts one structure for scrambling analog samples.

### Detailed Description of the Invention

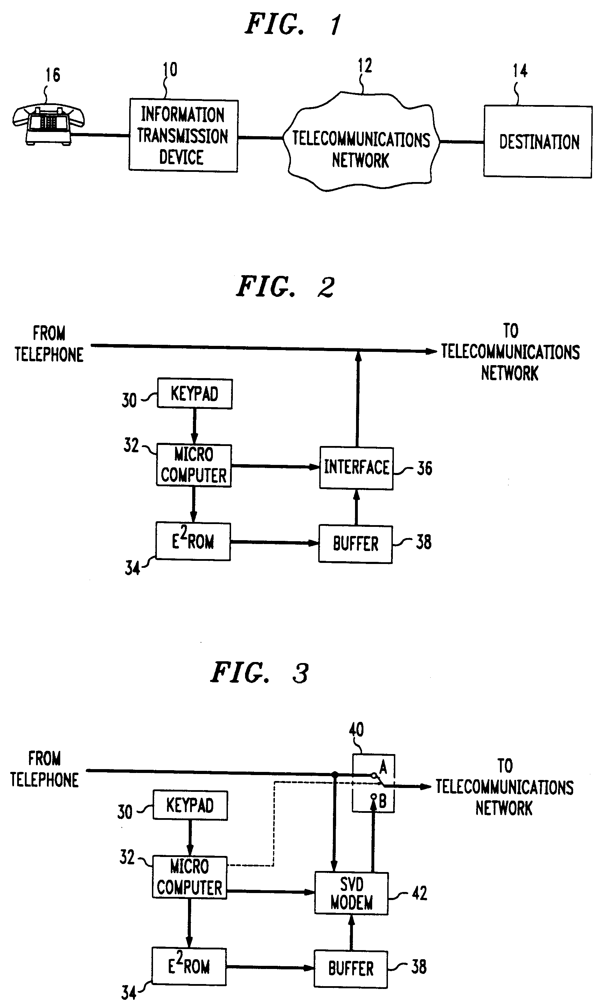

FIG. 1 illustrates how information transmission device 10 is used to transmit information over telecommunication network 12 to destination 14. In a typical interaction with a telemarketing service, a customer uses telephone 16 to communicate with a telemarketing service located at destination 14. After a verbal discussion specifying the product or services that the customer desires, the customer activates information transmission device 10 through use of a keypad. The keypad can be located on the information transmission device 10 or it can be, for example, the telephone keypad of telephone 16. The information transmission device transmits information such as the customer's name, address, telephone number, date of birth, credit card number with expiration date as well as other information. These blocks of data or information are transmitted under the control of the customer through the use of the keypad. Depending on which key of the keypad is pressed, information is provided. For example, pressing key 1 can result in only a name and address being transmitted. Pressing key 2 can result in only a credit card number being transmitted. Pressing key 3 can result in name, address, phone number, credit card information and data of birth information being transmitted. Other combinations of data can be transmitted using different keys of the keypad.

FIG. 2 illustrates the major components of information transmission device 10. Keypad 30 is used to communicate with microcomputer 32. Microcomputer 32 controls E ROM 34 (electrically erasable read only memory) and interface device 36. If a customer desires to transmit information, the customer selects which information is to be transferred via keypad 30. Microcomputer 32 monitors the output of keypad 30 to determine which keys have been pressed. Based on which keys are pressed, microcomputer 32 addresses E ROM 34 so that the information stored therein can be transferred to elastic buffer 38. It is also possible for microcomputer 32 to transfer data to buffer 38 based on voice commands. Elastic buffer 38 can be a buffer such as a FIFO (first in first out memory). Once the information has been transferred to buffer 38, microcomputer 32 indicates to interface 36 that it may take information from buffer 38 and transmit it over the telephone line through telephone network 12 to destination 14. Interface 36 should be compatible with the equipment located at destination 14. Interface 36 can be a DTMF (dual tone multi-frequency) generator, a simultaneous voice and data modem (SVD modem) or a integrated services digital network (ISDN) interface. If a DTMF generator is used, the equipment at destination 14 should be capable of decoding DTMF signals. If an SVD modem is used, a compatible modem should also be used at destination 14; the SVD modem that will be described at a later point. If an ISDN interface device is used, an ISDN device should also be used at destination 14. It is also possible to implement interface 36 using other well-known techniques for transmitting data over a telephone line.

With regard to interface 36, ISDN interfaces are also well-known in the art and include well-known protocols such as ISDN Q.931 and Q.921 protocols. ISDN technology is described in the AT&T Technical Journal, Vol. 66, Iss. 3, May-June 1987, and Vol. 65, Iss. 1, January-February, 1986. The ISDN interface should also support applications as defined in AT&T Network ISDN Primary Rate Interface Specification, Technical Reference 41449, April, 1989 and AT&T Network ISDN Primary Rate Interface and Special Applications Specification, Technical Reference 41459, April 1989.

Keypad 30 can be a simple keypad with only three or four keys, or it may be a full keypad that is similar to a telephone keypad. Additionally, it is possible for keypad 30 to be the same keypad as the keypad used by telephone 16. It is also possible when keypad 30 is shared with telephone 16, to enclose the remaining portions of information transmission device 10 inside of telephone 16. This offers the advantage of a cost savings by using only one keypad rather than two, and using one slightly larger housing rather than two separate housings.

Buffer 38 is a first in first out memory. It is also possible to use other types of memories, or to eliminate buffer 38 altogether and transfer information directly from E ROM 34 to interface 36. Buffer 38 offers the advantage of minimizing the timing requirements for information transfer between E ROM or memory 34 and interface 36.

Microcomputer 32 can be implemented using any of the widely available microcomputers or it may be implemented using a combination of microprocessor, read only memory and RAM. It is also possible to replace microcomputer 32 with a state machine. Using a state machine limits the flexibility of information transmission device 10; however, it reduces the cost of the device by using less expensive components.

FIG. 3 illustrates an embodiment where interface 36 is an SVD modem. Microcomputer 32 places switch 40 in position "A" when no information is being transmitted by SVD modem 42; and it places switch 40 i in position "B" when information is being transmitted by SVD modem 42. As a result, when a normal telephone conversation is taking place, SVD modem 42 is not connected to the telecommunications network; however, when information is to be transmitted, the signal from the telephone handset is combined with a data signal by SVD modem 42 and sent to the network via switch 40.

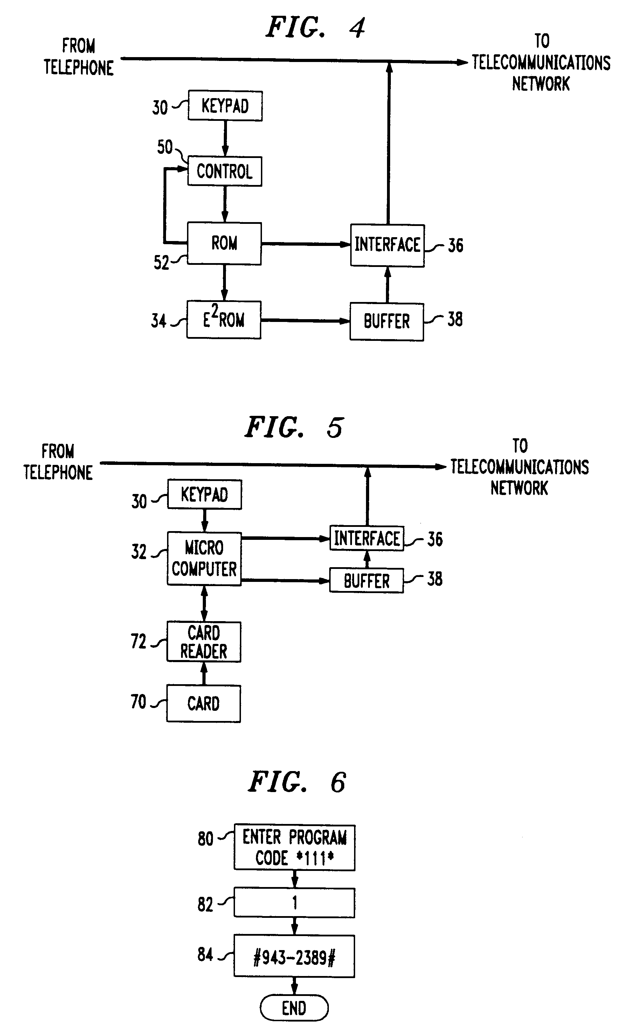

FIG. 4 illustrates an embodiment of information transmission device 10 using a state machine. As with the device of FIG. 2, keypad 30 is used to control information transferred to destination 14. Keypad 30 provides an input to counter 50. Based on the identify of the key pressed on keypad 30, a different starting address is provided to counter 50. Once given a starting address, counter 50 begins counting from that starting address. The outputs of counter 50 are provided to read only memory (ROM) 52. ROM 52 provides outputs that address E ROM 34. The portions of E ROM 34 that are addressed by ROM 52 contain the information to be transmitted. Based on the sections of E ROM or memory 34 that are addressed by ROM 52, different types of information are transferred. Once ROM 52 has addressed all the necessary locations for a transmission of information, ROM 52 provides an output to interface 36 to inform it that buffer 38 now contains the information to be transmitted. ROM 52 has an additional output that resets counter 50 to an idle state where it awaits additional inputs from keypad 30. As discussed with the embodiment of FIG. 2, the output from E ROM 34 is provided to elastic buffer 38. Elastic buffer 38 then provides data to interface 36 which transmits the information over the telecommunications network. State machine designs are well-known in the art and other configurations may be used to accomplish the same result.

FIG. 5 illustrates yet another embodiment of the present invention. In this embodiment, a personal data card 70 is used to store the information that is transmitted over the telecommunications network to destination 14. As with the embodiment of FIG. 2, keypad 30 communicates with microcomputer 32. Based on the inputs from keypad 30, microcomputer 32 accesses card reader 72 which reads information stored on card 70. Microcomputer 32 then places the information received from card reader 72 into elastic buffer 38. As with the other embodiments, once the information has been loaded to buffer 38, microcomputer 32 signals interface 36 to begin transmission over telecommunications network. Card 70 can be a credit card type device with a magnetic strip containing the information or it may be a PCMCIA (Personal Computer Memory Card International Association) type device which contains a solid state memory which holds the information to be transmitted. It is also possible to use a credit card like device or a plastic card that has a solid state memory embedded within it. These cards are known as Smart Cards. Smart Cards are well known in the art and are described in a book entitled "Smart Cards the New Bank Cards" by Jerome Svigals, published by Macmillan Publishing Company, 1987, New York, New York. Card 70 can be programmed with the information to be transmitted in the same fashion as conventional credit cards, PCMCIA devices and Smart Cards are programmed.

Information may be entered into memory 34 using keypad 30. Microcomputer 34 may be instructed to enter a programming mode by inputting a predetermined code using keypad 30. Once in the programming mode, information may be written into memory 34 by once again using keypad 30. For example, if a customer desires key 1 to cause the transmission of a phone number, the customer first presses a predetermined code to cause microcomputer 32 to enter program mode. The customer then presses key 1 followed by the pound sign and then the telephone number that is to be transmitted when key 1 is depressed followed by another pound sign. Transmission device 10 may be programmed to transmit other or additional information in response to the activation of other keys in a similar fashion.

FIG. 6 illustrates a flow chart which outlines the programming procedure. In step 80, the customer enters a program code such as *111*, which causes the microcomputer to enter the programming mode. In step 82 the user enters the key that is to be associated with the information to be entered. In this example, the customer presses the key labeled "1" on keypad 30. In step 84 the customer programs the data to be associated with key "1" into memory 34 by pressing the "#" key, entering the data, (in this example the data is a phone number) and then pressing the "#" key again. Completion of step 84 ends the programming process. If the customer desires to program additional keys, he or she simply repeats the process beginning with step 80; however, the appropriate key and data are used in steps 82 and 84, respectively.

In order to simplify programming, if a customer desires to have a certain key send all information stored in memory 34, a predefined key such as key 9 may be used to indicate to microcomputer 32 that all information stored in memory 34 is to be transmitted over the telecommunication network.

If keypad 30 is shared by telephone 16 and information transmission device 10, the programming code should only be recognized when microcomputer 32 detects that the telephone is on-hook. In addition, when in normal operation (i.e., not the programming mode), microcomputer 32 should respond to keypad inputs when telephone 16 is off-hook and the input to microcomputer 32 is preceded by a predefined key such as the "#" sign.

### Description of an SVD Modem

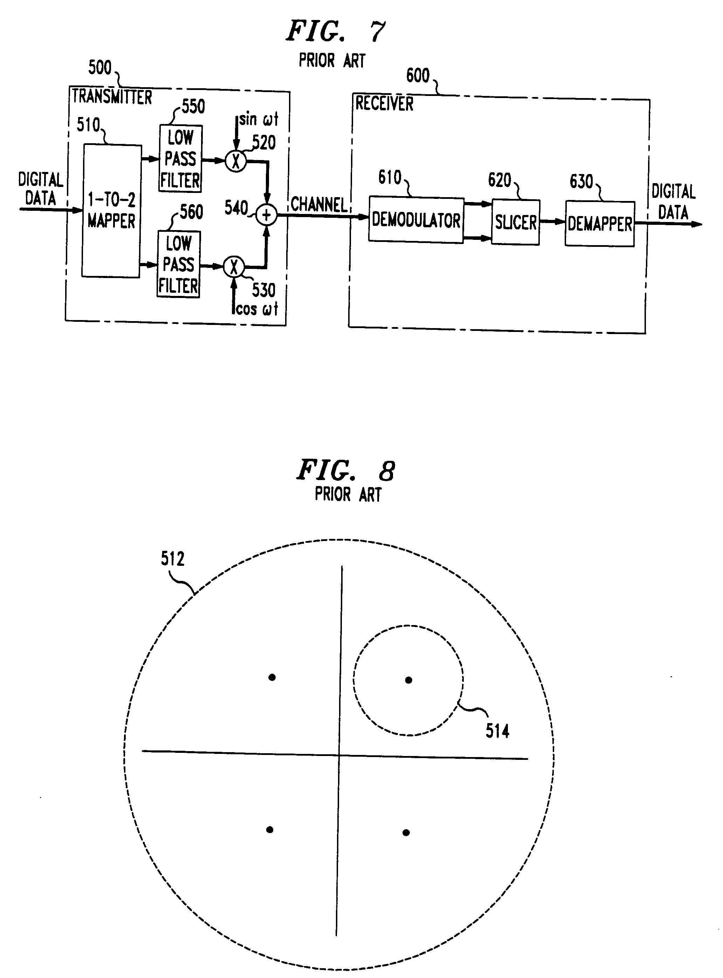

To place the SVD (Simultaneous Voice and Data) modem in context, FIG. 7 presents a very basic block diagram of a modem that communicates digital data via quadrature modulation techniques. Section 500 is the modem's transmitter section and section 600 is the modem's receiver section. Specifically, in the transmitter section digital data is applied in FIG. 7 to a 1-to-2 mapper 510, and mapper 510 develops two outputs which typically are referred to as the in-phase and quadrature samples. The in-phase samples are applied via low pass filter 550 to modulator 520, which multiplies the applied signal by a carrier -- i.e., *sin*ω*t* in FIG. 7. The quadrature samples are applied via low pass filter 560 to modulator 530, which multiplies the applied signal by a second carrier. The second carrier is orthogonal to the first carrier; namely, *cos*ω*t*. Filters 550 and 560 must be bandlimited to no more than ω in order to avoid aliasing and to at least half the inverse of the output sample rate of mapper 510. The output signals of modulators 520 and 530 are added in element 540 to develop the analog signal of the modem's transmitter section.

In operation, the digital data applied to the FIG. 7 apparatus is a stream of bits. Element 510 views the incoming signal as a stream of symbols that each comprises a pre selected number of consecutive bits, and maps each symbol into an in-phase analog sample and a quadrature analog sample.

Practitioners in the art often describe the operations performed in the FIG. 7 apparatus by means of a signal space diagram, such as shown in FIG. 8. The x axis corresponds to one of the carrier signals (e.g., *cos*ω*t*) and the y axis corresponds to the other carrier signal (*sin*ω*t*). The in-phase and quadrature samples delivered by element 510, in effect, specify a location in the signal space of FIG. 8. Accordingly, the set of possible samples that element 510 can produce corresponds to a set of sample points (i.e., a constellation of points) in the signal space depiction of FIG. 8. A 4-point signal constellation is shown, by way of illustration, in FIG. 8. It is well known, however, that one can create signal point constellations with a larger number of signal points.

To receive signals that were modulated by the FIG. 7 apparatus in accordance with the specific constellation depicted in FIG. 8, one must only identify whether the received signal is in the first, second, third or fourth quadrant of the signal space. That means that there exists great latitude in the signals that are received, and any received signal that is still in the correct quadrant is mapped to the correct constellation signal point in that quadrant. Extended to other (and perhaps larger) constellations, the signal space can be divided into regions and the receiver's decision is made with respect to the region in which the received signal is located. We call these regions "neighborhood" regions.

Returning to FIG. 7 and addressing the modem's receiver section, the modulated signal is applied to demodulator 610. Demodulator 610 recovers the in-phase and quadrature components and applies them to slicer 620. Slicer 620 converts the in-phase and quadrature components into symbols and applies the symbols to de-mapper 630. De-mapper 630 maps the symbols into bit streams to form the recovered digital data stream.

Absent any signal degradation (such as due to noise added in the channel) the signal received by demodulator 610 would be precisely the same as the signal sent by adder 540, and a determination of neighborhood regions in which the signal is found (by slicer 620) would be relatively simple and error-free. However, noise that is added to the transmitted signal shifts the received signal in the signal space and modifies the input to slicer 620. Stated in other words, a noise signal that adds to the signal flowing through the communication channel corresponds to a vector signal in the signal space of FIG. 8 that is added to a transmitted sample point. That added vector is of unknown magnitude and unknown phase. Consequently, added noise converts a transmitted signal that corresponds to a point in the signal space into a region in the signal space. This phenomenon is depicted in FIG. 8 by circle 514. Some refer to this circle as a signal space "noise cloud" surrounding the transmitted signal.

From the above it is clear that in order to detect the transmitted signals without errors, the neighborhood regions must be large enough to encompass the noise cloud. Since the average power of the sent signal is typically limited by other considerations, the extent to which the signal constellation covers the infinite space represented by the x and y axes is also limited. This is represented in FIG. 8 by circle 512. The restriction imposed by circle 512, coupled with the restriction on the size of the neighborhood regions that is imposed by noise considerations limits the number of transmitted signal points in the constellation.

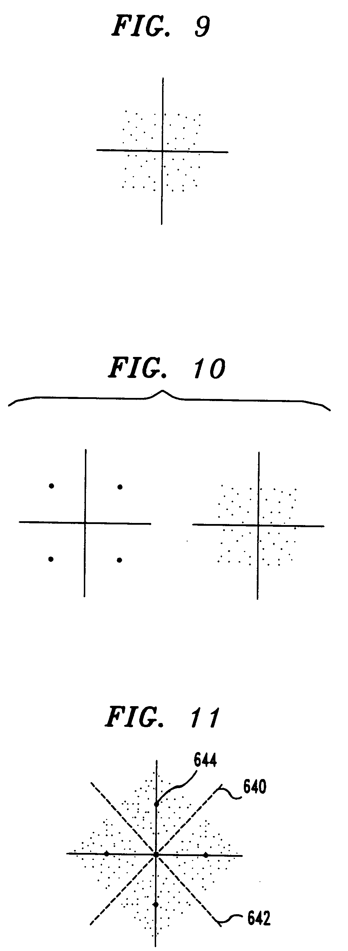

As indicated above, it has been observed that in typical modem designs the allowable signal power and the expected fidelity of the channel combine to control the constellation size. Less noisy channels allow for larger constellations, and larger constellations permit higher digital data throughputs. This leads to a totally revolutionary idea of utilizing all, or essentially all, of the available signal space for the transmission of information. A transmitter signal space in accordance with this revolutionary approach is depicted in FIG. 9 where a plurality of signal points are depicted randomly within the signal space. These points are illustrative of the various vectors that the transmitter is allowed to send out. There are no more "constellations of points", where a decision must be made between constellation points; there is only the entirety of the signal space. In other words, rather than having digital signals that are mapped onto a fixed constellation within a signal space, FIG. 9 depicts analog signals that are mapped onto a signal space. When the analog signals that form the in-phase component are independent of the analog signals that form the quadrature component, the viable signal space of FIG. 9 may be rectangular.

Having recognized the advantages of sending analog signals in accordance with the signal space of FIG. 9, the next innovation is to alternate between the signal spaces of FIG. 8 and FIG. 9. That is, the innovation is to send customer analog signals or customer digital signals as the need arises. This is depicted in FIG. 10.

Further, having recognized the advantages of sending either analog or digital signals in accordance with the signal spaces of FIG. 10, it was discovered that a totally different communication approach can be taken, that communicating both analog and digital signals, "can be expressed" concurrently, in a combined signal space. This is illustrated in FIG. 11, where four neighborhoods are identified for illustrative purposes, with demarcation borders identified by dashed lines 640 and 642.

It may be noted that, for purposes of this disclosure, according to the FIG. 11 depiction, the analog signals that form "signal clouds" around each digital constellation point (e.g., point 644) should be restricted in their dynamic range to be totally contained within the neighborhood regions. Hence, here too there is a trade-off between constellation size (which directly affects digital through-put) and dynamic range of the transmitted analog signal (which in some situations translates to "resolution").

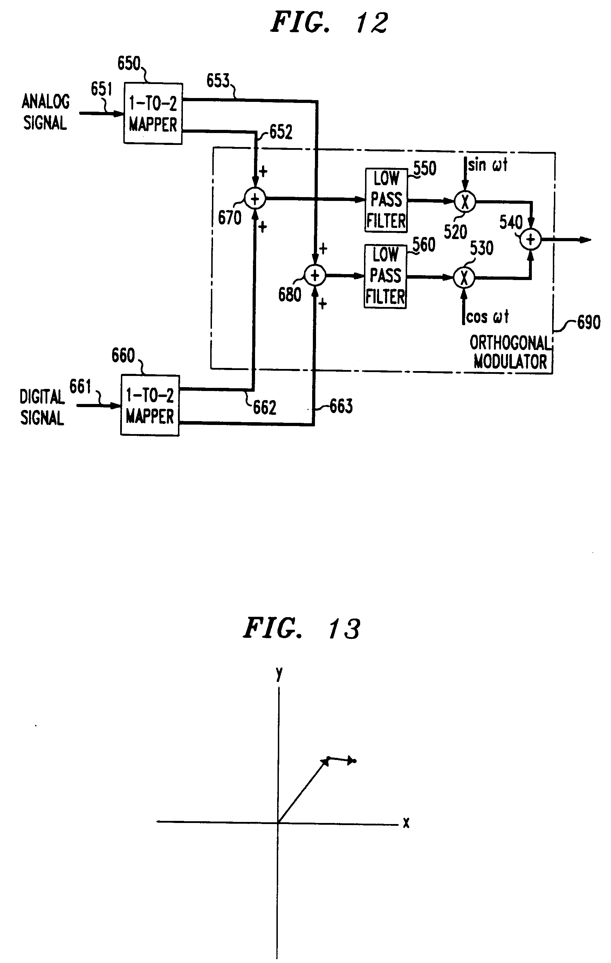

FIG. 12 depicts an arrangement that very basically illustrates the principles of the SVD modem. It includes a 1-to-2 dimensional mapper 660 responsive to digital signals applied on line 661. Mapper 660 develops two output signals on lines 662 and 663, each of which possesses pulses with quantized amplitudes that relate to the digital signals arriving on line 661. FIG. 12 also includes a 1-to-2 mapper 650 that responds to an applied analog signal on line 651, and it develops two output signals on lines 652 and 653, each of which possesses pulses with continuous amplitudes that relate to the analog signal on line 651. Outputs 652 and 662 are combined in adder 670 and outputs 653 and 663 are combined in adder 680. The outputs of adders 670 and 680 form the components of the signals that are represented by the signal space of FIG. 11. As in FIG. 7, the outputs of adders 670 and 680 are applied via low pass filters 550 and 560 to modulators 520 and 530 and summed in adder 540 to form a modulated signal as is typically known in the modem art.

In FIG. 12 element 660 is depicted as a 1-to-2 mapper. However, it should be understood that element 660 can be an M-to-N mapper. That is, element 660 can be responsive to a plurality (M) of digital signals and it can develop a different plurality (N) of output signals. Similarly, element 650 can be a J-to-K encoder that is responsive to a plurality of analog signals. Likewise, the collection of elements that follow elements 650 and 660 (i.e., elements 670, 680, 520, 530, 540, 550 and 560), which form orthogonal modulator 690 can be constructed to be responsive to whatever plurality of outputs of that elements 650 and 660 are designed to produce. More specifically, those elements must account for all of the applied input signals, and that means that they must be able to handle K or N signals, whichever is larger. In such a circumstance, however, the user can assume that the larger of the two (K or N) is the dimensionality of the system, and some of the dimensions have either no digital data, or no analog data, whichever applies. Of course, if there are "dimensions" for which there is no digital or analog data, other information can be sent over those dimensions, such as equalization "side" information. In the context of a signal space, the N pluralities of output signals of elements 650 and 660 (assuming N is larger than K) correspond to the collection of components of vectors in multi-dimensional space; e.g., N-dimensional space. The coordinates of this multi-dimensional space correspond to the orthogonal modulation signals within orthogonal modulator 690. In FIG. 12, the two orthogonal modulation signals are *cos*ω*t* and *sin*ω*t* but other modulation signals are also possible; for example, code division multiplexing (CDMA) templates. For purposes of the SVD modem, orthogonal modulation signals are modulation signals that develop a transmitted signal comprising concurrent element signals and yet allow the receiver to separate the received signal into its constituent element signals, those being the signals developed in response to each of the modulation signals. It may also be observed that, relative to FIG. 11, orthogonal modulator 690 performs vector summation of the symbol vector represented by the components developed by element 660 with the analog information vector represented by the components developed by element 650. This is depicted in FIG. 13.

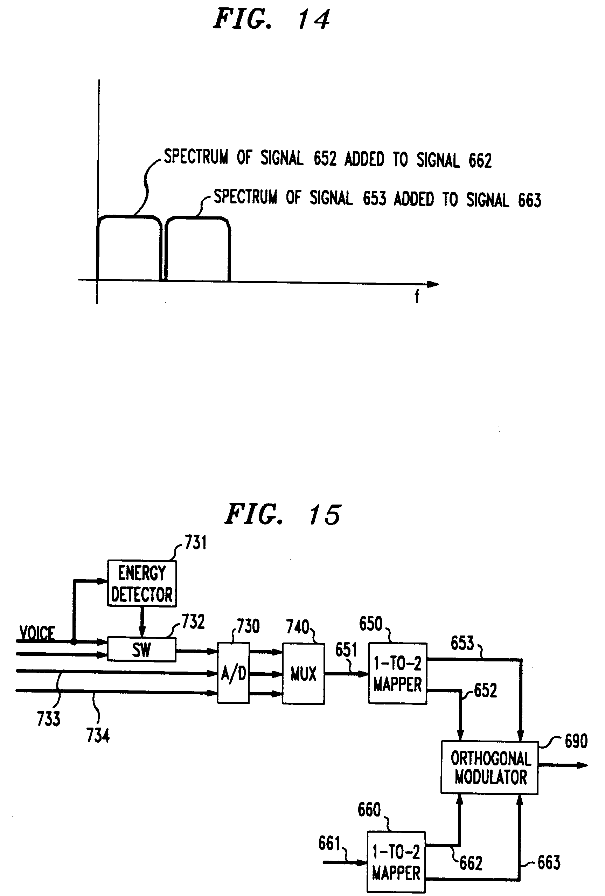

In connection with FIG. 7, it may be noted in passing that the principles of the SVD modem may be utilized even when the output signals of adders 670 and 680 are communicated (e.g., transmitted) directly, without the benefit of combining them in orthogonal modulator 690. Also, orthogonal modulator 690 can simply be a band-shifting means. To the extent that the output of adder 670 (for example) is band-limited, the output of adder 680 can be shifted beyond the band-limited output signal of adder 670 and combined with the output signal of adder 670. This is presented in FIG. 14. It may also be appreciated that the principles of the SVD modem may be exercised without the use of element 660 in those situations where no digital streams are presented.

To this point in the instant disclosure the implication has been that the input signal applied to element 650 of FIG. 12 is analog. However, that does not have to be strictly the case. In accordance with conventional techniques, an analog signal that is bandlimited can be sampled (within the proper Nyquist bounds). Hence, it should be understood that the input signal to element 650 can be a sequence of analog samples. Moreover, a sampled analog signal can be quantized and represented in digital form. Indeed, an analog signal that has been sampled and converted to digital form can then be converted to amplitude quantized pulse amplitude-modulated format. All of those representations are representations of an analog signal. For example, the collection of the amplitude-quantized PAM pulses is identical to the original analog signal within the bounds of the quantization errors introduced by the sampling and quantizing (A/D conversion followed by D/A conversion) processes.

The fact that sampling and amplitude quantization of the analog signal at the input of element 650 is permitted offers a number of benefits. For one, it allows the signal to be presented to element 650 in digital format. For another, it permits simple multiplexing of different information sources. Thus, for example, elements 650, 660 and 690 can be implemented in accordance with present day modem realizations; i.e., with one or more microprocessors operating under stored program control.

An example of input signal multiplexing is shown in FIG. 15, which presents an embodiment that includes an A/D converter bank 730 followed by a multiplexer 740. Converter bank 730 converts a plurality of analog signals, such as on lines 733 and 734, to digital format and multiplexer 740 multiplexes its input signals and applies them to element 650. Elements 730 and 740 are conventional A/D and multiplexer elements, respectively.

The combination of elements 730 and 740 allows applying a number of narrow band analog signals to orthogonal modulator 690. The primary limitations are the carrier frequency and the allowable transmission bandwidth of the channel. The narrow band signal can, of course, come from any source. For example, a system installed in an ambulance may sacrifice some voice bandwidth in order to allow narrow band telemetry data of blood pressure and heart pulse rate to be communicated concurrently with the voice.

Additionally, a voice signal energy detector may be included, such as disclosed in U.S. Patent 5,081,647, which would detect periods of silence and send less urgent telemetry data during those silence periods. This is illustrated by elements 731 and 732 in FIG. 15.

The fact that the input to element 650 is digital (in a digital implementation of elements 650, 660 and 690) and that the input to element 660 is also digital should not be confused. The digital input to element 660 is a stream of digits that are each equally important. Hence, those digits are converted into symbols and the symbols into constellation points, and the constellation points are within neighborhoods which are identified by a slicer (e.g., slicer 620 in FIG. 7) within a modem's receiver section. In contradistinction, the digital signals applied to element 650 correspond to digital words that represent amplitude, and the specific interrelationship between adjacent bits of the digital words is maintained. As indicated above, the signal cloud around a signal point within a constellation does not represent a plurality of signal points that must be distinguished, and that is a fundamental distinction.

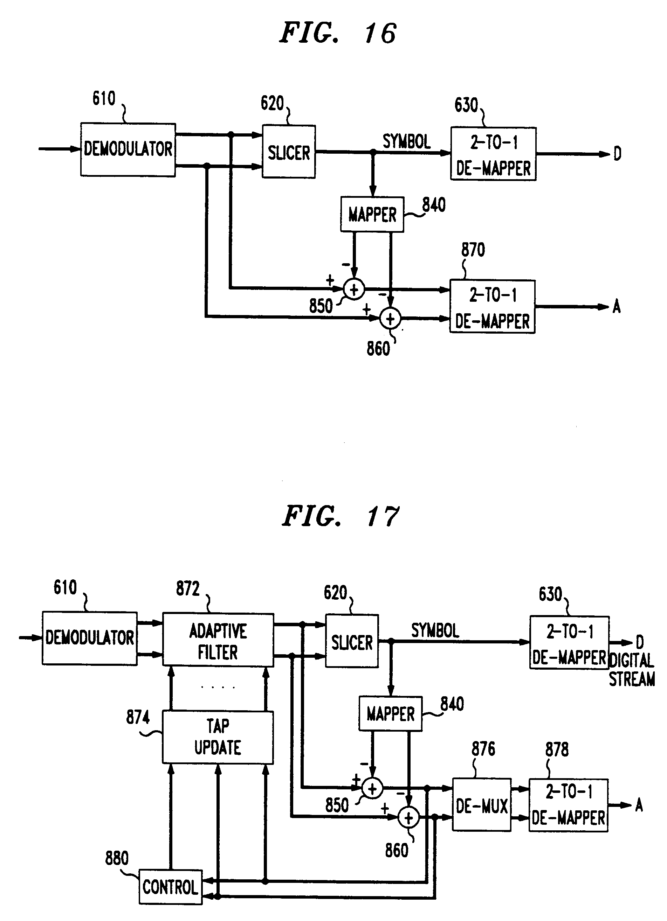

FIG. 16 presents a basic block diagram of a modem's receiver section in conformance with the principles of the SVD modem. The modulated input signal received from the channel is applied to demodulator 610 which develops the in-phase and quadrature components. Those are applied to slicer 620 which identifies the symbols, and the symbols are applied to de-mapper 630. All this is in accord with conventional modem approaches, as described in connection with FIG. 7. In addition, FIG. 16 includes a mapper 840 that is responsive to the symbols developed by slicer 620. The output of mapper 840 is an accurate estimate of the set of in-phase and quadrature components (that are applied in the FIG. 7 arrangement to elements 550 and 560). The outputs of mapper 840 are subtracted from the outputs of demodulator 610 in subtracters 850 and 860. The outputs of subtracters 850 and 860 are applied to 2-to-1 de-mapper 870 which recombines the analog samples to form an estimate of the original analog signal. De-mapper 870 performs the inverse function of mapper 650.

In may be noted that slicer 620 can be designed to directly provide the output signals that mapper 840 develops; and moreover, de-mapper 630 can be made responsive to such signals. That would alter the FIG. 16 in the sense that slicer 620 and mapper 840 would combine to form a single element and de-mapper 630 as well as adders 850 and 860 would be responsive to that combined element.

In analog realizations of the SVD modem (e.g., FIG. 12), mapper 650 is responsive to analog signals. Various approaches can be taken to develop the plurality of outputs (two outputs, in the case of element 650 shown in the FIGS.). For example, a single bandlimited analog signal can be divided into a plurality of baseband signals by simply filtering and modulating selected sub-bands. Alternatively, element 650 can accept a plurality of bandlimited analog signals and assign each one of the plurality of bandlimited analog signals to different outputs of element 650.

In time sampled realizations of the SVD modem (whether the realization continues with analog circuitry or digital circuitry), element 650 can simply route alternate samples of a single analog signal to different outputs of element 650, or multiplex a plurality of analog signals and distribute the samples of those signals in any convenient manner.

In order to allow for nonlinear techniques that may be employed to enhance the communication qualities of the SVD modem, it is important to effect equalization of the channel in order to minimize intersymbol interference. Conventional modem technology can be brought to bear to this need.

FIG. 17 presents a block diagram of an arrangement that incorporates equalization. Specifically, FIG. 17 is depicted with a modulator that is followed by equalization hardware (which together can be thought of as a super-demodulator). The equalization hardware comprises an adaptive filter 872 that is interposed between demodulator 610 and slicer 620. The operational characteristics of filter 872 are controlled by filter coefficients that are stored -- in modifiable form -- within tap update block 874. Tap update block 874 is responsive to the output signals of subtracters 850 and 860. The adaptation of filter 872 is carried out in accordance with conventional modem techniques. The outputs of subtracters 850 and 860 are also applied to demultiplexer 876 and the outputs of demultiplexer 876 are applied to de-mapper 878. De-mapper 876 comprises a bank of de-mappers 870 of FIG. 16. Elements 876 and 878 are included to illustrate a receiver that is adapted for applications where a plurality of analog inputs are multiplexed. Of course, in applications where there is no multiplexing, de-mapper 870 can be substituted.

In accordance with some adaptation approaches, it is easiest to carry out adaptation and the corresponding coefficient updates when the power in the analog signal is small. To limit the process to such intervals, FIG. 17 includes a power detector within control element 880 that is responsive to subtracters 850 and 860. Block 880 is also conventional. It includes a power detection circuit that evaluates the power contained in the signals of subtracters 850 and 860 and delivers a control signal to block 874 to enable (or disable) the coefficient updating process. Of course, block 880 may be more generic, in that the control signal can be derived from other than the analog signal, such as from side information from the transmitter.

FIG. 17 depicts one arrangement for effecting equalization of the transmission channel between a sending modem's transmitter section and a receiving modem's receiver section; to wit, at the receiver's front end, following the demodulator. However, it is well known that equalization can be performed anywhere along the channel, going back even to within a modem's transmitter section.

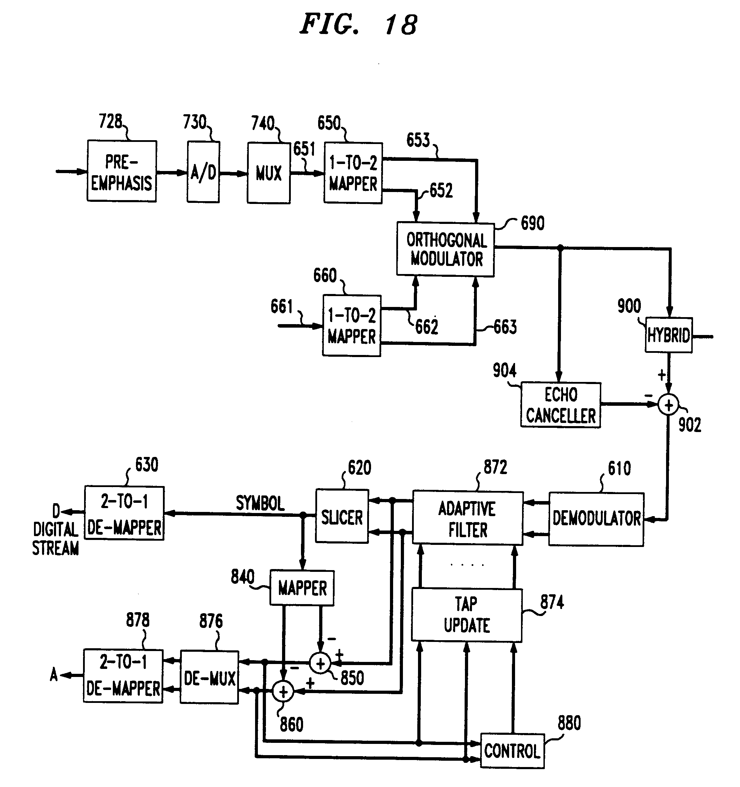

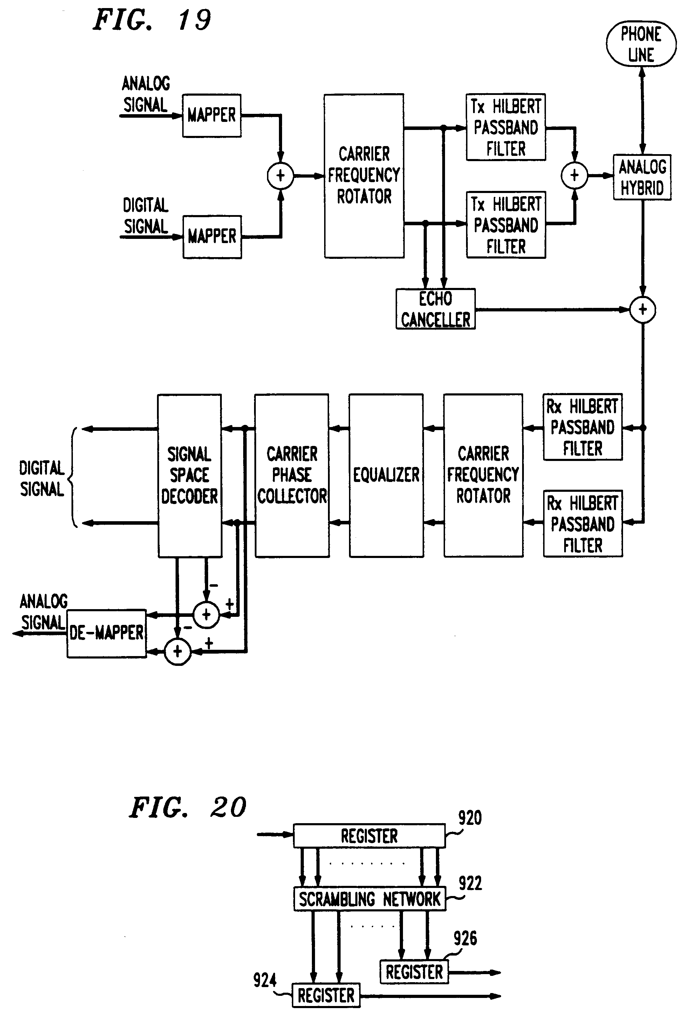

FIG. 18 depicts the entire, full duplex, modem constructed in accordance with the depictions of FIGS. 15 and 17. More specifically, a transmitter section (FIG. 15) is coupled with a receiver section (FIG. 17) through hybrid 900 and subtracter 902. Subtracter 902 cooperates with echo canceller 904 in the conventional way to subtract unwanted signals from the signal applied to demodulator 610. For sake of simplicity, echo canceller 904 is shown to connected to the output of orthogonal modulator 690, and in analog embodiments of element 904 this is perfectly satisfactory. However, in digital embodiments it is well known that efficiencies can be realized by having the echo canceller be responsive to the outputs of mapper 660, where the signal rate is much lower. An improvement which incorporates the principles of the SVD modem is shown in FIG. 19. It may be noted that some of the elements in FIG. 19 are designated by different labels; such as "Hilbert passband filter", which corresponds to a modulator, etc. These are circuits that attain the desired results through somewhat different calculations and are well known to persons skilled in the modem art.

The echo canceling is performed, as in all modems, during a training period, when the far end signal source is silent and the echo canceller is adapted to minimize the output of subtracter 902.

In connection with FIG. 12 it has been disclosed that the input to element 650 can be a sampled analog signal, as well as an un-sampled analog signal. It has also been disclosed above that when element 650 is a 1-to-2 mapper (as compared to 1-to-N mapper) and the desired output of element 650 is pairs of a sampled analog signal, the pairs of analog samples can be derived by simply delaying the incoming analog signal by 1/B and sampling both the delayed and the un-delayed versions at rate B. This provides sample pairs that correspond to adjacent samples of the original analog signal sampled at rate 1/2B seconds. Actually, privacy of the communication is enhanced when the samples are not adjacent, and FIG. 20 presents one approach for deriving pairs from non-adjacent samples. It basically includes an input register 920 for storing K analog samples that arrive at rate 2B, a scrambling network 922 that scrambles the outputs of register 920 and develops K outputs, and registers 924 and 926 that are responsive to the outputs of network 922. Registers 924 and 926 store K/2 analog samples every K/2B seconds and output the stored samples at rate 1/2B seconds. Scrambling network 922 may be simply a cross-connect field.

The above described a number of embodiments that illustrate the principles of this SVD modem. Of course, other embodiments are possible and other elements can be included to enhance operation of the embodiments. For example, the "analog" input that enters orthogonal modulator 690 can be filtered to pre-emphasize the high frequencies and, correspondingly, the "analog" output of subtracters 850 and 860 can be filtered to remove the pre-emphasis. The pre-emphasis can be effected, for example, within the A/D converter 730 or even prior thereto, such as in pre-emphasis filter 728 shown in FIG. 18. The filtering can be done while the "analog" signal is truly analog, or it could be done when the "analog" signal is represented digitally -- such as when the transmitter and receiver sections are effected with digital hardware.

Other configurations are possible and other elements can be included to enhance operation of the configurations. For example, the "analog" input that enters orthogonal modulator 690 can be filtered to pre-emphasize the high frequencies and, correspondingly, the "analog" output of subtracters 850 and 860 can be filtered to remove the pre-emphasis. The pre-emphasis can be effected, for example, within the A/D converter 730 or even prior thereto, such as in pre-emphasis filter 728 shown in FIG. 18. The filtering can be done while the "analog" signal is truly analog, or it could be done when the "analog" signal is represented digitally -- such as when the transmitter and receiver sections are effected with digital hardware.

## Claims

1. A calling party controlled apparatus for transmitting data over a telecommunications network to a called party (12), CHARACTERIZED BY:
storage means (34) for storing a plurality of blocks of data;
control means (22) for accessing a first block of data stored in said storage means (34) in response to the calling party's activation of a first switch belonging to a plurality of switches (30), said first block of data being selected by said first switch's activation;
voice communication means (16) for producing a voice signal representative of the calling party's voice; and
interface means (42) for transmitting said first block of data to the called party over the telecommunications network (12) by adding an unmodulated data signal to said voice signal to form a sum signal, unmodulated said data signal being representative of data in said first block of data.

2. The apparatus of claim 1, CHARACTERIZED IN THAT said unmodulated data signal specifies a symbol belonging to a plurality of symbols.

3. The apparatus of claim 1, CHARACTERIZED IN THAT said unmodulated data signal is a two dimensional signal.

4. The apparatus of claim 1, CHARACTERIZED IN THAT said interface means (42) transmits said sum signal using an orthogonal modulator.
